# EUROPÄISCHE PATENTSCHRIFT

(11) **EP 1 661 794 B1**
(45) Veröffentlichungstag und Bekanntmachung des Hinweises auf die Patenterteilung: **18.08.2010**
(21) Anmeldenummer: 05021690.2
(22) Anmeldetag: 05.10.2005
(51) Int. Cl.: B62D 23/00, B62D 21/18, B62D 65/02, B62D 29/00, B62D 27/06

(54) **Aufbau für Kraftfahrzeuge**
Bodywork for a motor vehicle
Carrosserie pour un véhicule à moteur

(30) Priorität: 24.11.2004 DE 102004056644
(43) Veröffentlichungstag der Anmeldung: 31.05.2006
(73) Patentinhaber: Dr. Ing. h.c. F. Porsche AG, 70435 Stuttgart (DE)
(72) Erfinder: Koehr, Robert, 67435 Neustadt (DE); Polzer, Patrick, 75417 Muehlacker (DE)

(56) Entgegenhaltungen:
- EP-A- 1 331 163
- EP-A- 1 386 829
- WO-A-97/41010
- DE-A1- 10 308 759
- DE-U1- 29 607 549
- GB-A- 2 367 270
- US-A- 4 369 559
- US-A- 6 085 859
- US-B1- 6 193 273
- PATENT ABSTRACTS OF JAPAN Bd. 015, Nr. 065 (M-1082), 15. Februar 1991 (1991-02-15) -& JP 02 293275 A (YAMAHA MOTOR CO LTD), 4. Dezember 1990 (1990-12-04)

## Beschreibung

Die Erfindung bezieht sich auf einen Aufbau für Kraftfahrzeuge, insbesondere Personenkraftwagen nach dem Oberbegriff das Patentanspruchs 1.

Ein bekanntes Kraftfahrzeug, Zeitschrift IT Quattroroute 45 (2000) 531 (Januar) Seite 138, der Hochleistungskategorie weist einen Aufbau mit einer zweisitzigen Fahrgastraumstruktur auf. Diese Fahrgastraumstruktur besteht aus einem hochfesten Kunststoff und ist mit einem Antriebsaggregat direkt d.h. ohne Zwischenschaltung einer Tragstruktur verblockt. Das Antriebsaggregat ist zwischen den Radachsen, jedoch benachbart der Hinterachse - Mittelmotoranordnung - in den Personenwagen eingebaut.

Die EP 0 295 661 A2 befasst sich mit einer hinteren Tragstruktur, die unter Vermittlung nachgiebiger Elemente mit einer Fahrgastraumstruktur verbunden ist. Die besagte Tragstruktur wird durch einen Rohrrahmen gebildet, umfassend obere und untere Längsträger bzw. Querträger und zwischen letzteren verlaufenden Stützträger. Darüber hinaus sind an dieser Rohrrahmenkonstruktion Vorkehrungen getroffen, um ein Antriebsaggregat und Radaufhängungsglieder aufzunehmen.

Aus der DE 296 07 549 U1 ist ein Fahrzeugaufbau mit einem Gitterrohrrahmen bekannt, wobei der Aufbau selbst drei Bereiche, nämlich einen Frontbereich, eine Fahrgastzelle und einen Heckbereich umfasst und alle diese Bereiche vom übergreifenden Gitterrohrrahmen verstärkt werden. Gleichzeitig ist der Gitterrohrrahmen im Heckbereich so ausgeführt, dass die Antriebseinheit an diesem lagerbar ist.

In der JP 02293275 A, die den Oberbegriff des Anspruchs 1 bildet, wird, um einen Fahrzeugaufbau gewichtsmäßig leichter zu gestalten, vorgeschlagen, an wabenförmige Platten Rohrkonstruktionen anzuflanschen. Dabei bilden die wabenförmigen Platten den unteren Bereich des Fahrgastraums, während die Rohrkonstruktion den Vorbau, den Heckbereich sowie den oberen Bereich des Fahrgastraums bilden.

Außerdem geht aus der FR 940 982 ein Aufbau mit einer Fahrgastraumstruktur hervor, die von einer vorderen und einer hinteren Tragstruktur begrenzt ist. Beide Tragstrukturen werden durch metallische Gitterrohrrahmen gebildet, wobei eine dieser Tragstrukturen ein Antriebsaggregat aufnimmt. Von der Fahrgastraumstruktur sind lageraugenartige Verlängerungen weggeführt, die von Lagergabeln, angebracht an Rohrträgern der Tragstrukturen, umgriffen werden. Zur Befestigung der Tragstrukturen an der Fahrgastraumstruktur diene Haltemittel.

Es ist Aufgabe der Erfindung einen Personenwagen mit einer Fahrgastraumstruktur und einer Tragstruktur zu schaffen, die sich durch besondere Steifigkeit auszeichnen, wobei die Fahrgastraumstruktur mit besonderen Vorkehrungen zum Schutz von Passagieren auszugestalten ist. Dabei sollte aber auch sichergestellt sein, dass ein Antriebsaggregat und Fahrwerksteile leicht montierbar mit der Tragstruktur verbunden sind.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass der Aufbaukörper der Fahrgastraumstruktur, die Versteifungsstruktur und die Tragstruktur einen verwindungsarmen und hoch belastbaren Aufbau bilden. Die Versteifungsstruktur stellt sicher, dass die Insassen des Personenwagens bei unfallbedingten auf den Aufbau einwirkenden Belastungen weit reichenden zusätzlichen Schutz erfahren. Die Tragstruktur für das Antriebsaggregat lässt sich so konzipieren, dass letzteres einfach ein- und ausbaubar ist. Sinngemäß gilt dies auch für die Fahrwerksteile der baulich leicht realisierbaren Aufnahmebrücke, wobei die unhabhängige Lagerung der Fahrwerksteile vom Antriebsaggregat die freie Gestaltung unterstützt. Die Versteifungsstruktur weist Rohrstreben auf, deren Anordnung und Verlauf besagte Versteifungsstruktur bezüglich Raumbedarf und Stützfunktion optimieren.

In der Zeichnung wird ein Ausführungsbeispiel der Erfindung gezeigt, das nachstehend näher beschrieben wird.

Es zeigen
- Fig. 1: eine schematische Seitenansicht des Personenwagens mit dem Aufbau nach der Erfindung,
- Fig. 2: eine Schrägansicht des Personenwagens von der Seite, und zwar in Fahrtrichtung,
- Fig. 3: eine Ansicht entsprechend Fig. 2 mit Einzelheiten einer Versteifungsstruktur des Aufbaus,
- Fig. 4: eine Schrägansicht in Fahrtrichtung auf eine Tragstruktur nach der Erfindung,
- Fig. 5: eine Einzelheit X der Fig. 4 in größerem Maßstab.

Ein Kraftfahrzeug bzw. Personenkraftwagen 1 der Hochleistungskategorie umfasst eine Vorderachse 2 und eine Hinterachse 3, die einen Aufbau Ab tragen. Der Aufbau Ab umfasst eine Fahrgastraumstruktur 4, die zur Aufnahme von zwei Passagieren ausgebildet ist. An eine zwischen der Vorderachse 2 und der Hinterachse 3 liegenden aufrechten Rückwand 5 der Fahrgastraumstruktur 4 ist eine Tragstruktur 6 angeschlossen, die sowohl ein Antriebsaggregat 7 - Brennkraftmaschine und Getriebe, die miteinander verblockt sind - wie auch nicht näher dargestellte Fahrwerksteile für Hinterräder 8 der Hinterachse 3 aufnehmen.

Die Tragstruktur 6 ist unter Zwischenschaltung von Halteelementen vorzugsweise Schrauben - DE 102 02 957 A1- mit der Fahrgastraumstruktur 4 verbunden, die einen aus hochfeste Werkstoff, insbesondere glasfaserverstärktem Kunststoff - Aufbaukörper 9 aufweist. In einem Fahrgastraum 10 des Aufbaukörpers 9 ist eine Versteifungsstruktur 11 vorgesehen. An einem metallischen Rohrrahmen 12 der Tragstruktur 6 ist das Antriebsaggregat 7 befestigt, wogegen an einer Aufnahmebrücke 13 der Tragstruktur 6 die Fahrwerksteile der Hinterräder 8 gelagert sind. Die Aufnahmebrücke 13 ist durch den Rohrrahmen 12 von der Fahrgastraumstruktur 4 getrennt, und sie erstreckt sich in Richtung Heck 14 des Personenkraftwagens 1.

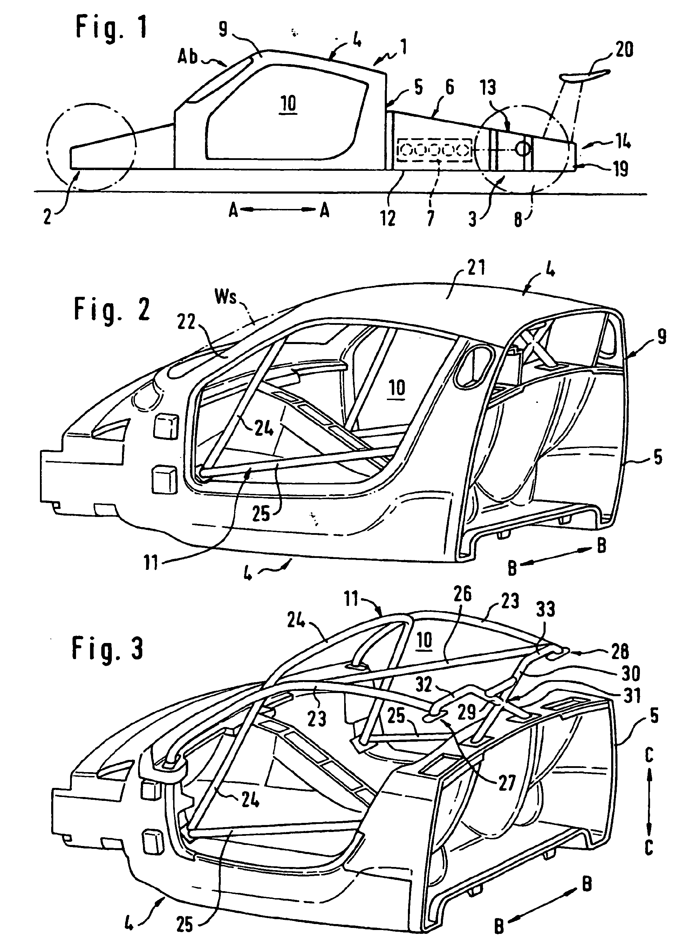

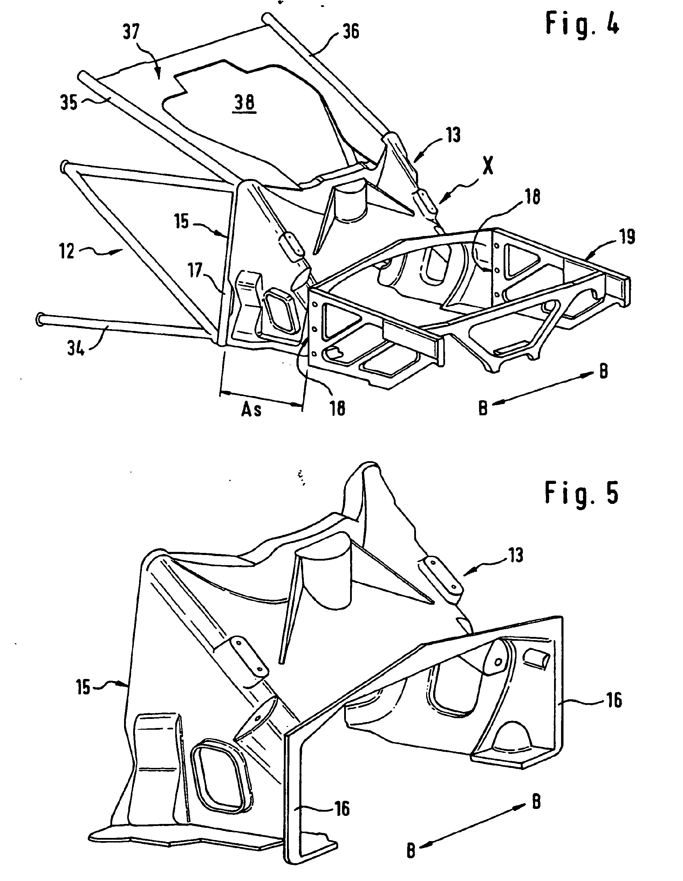

Gemäß Fig. 4 und 5 ist die aus einer Leichtmetalllegierung bestehende Aufnahmebrücke 13 ist mit ersten Verbindungsabschnitten 15 und zweiten Verbindungsabschnitten 16 versehen, die in etwa aufrecht und in Fahrzeuglängsrichtung A-A gesehen mit Abstand As zueinander verlaufen. Dabei sind die ersten Verbindungsabschnitte 15 mit aufrechten Rohrelementen 17 des Rohrrahmens 12 und die zweiten Verbindungsabschnitte 16 mit ebenfalls aufrechten Rahmenelementen 18 eines Tragrahmens 19 für ein aerodynamisches Leitwerk 20 - Fig.1- zur Abtriebserzeugung bei definierter Fahrgeschwindigkeit des Personenkraftwagens 1 versehen. Zwischen den Rohrelementen 17 und den ersten Verbindungsabschnitten 15 bzw. den zweiten Verbindungsabschnitten 16 sind nicht gezeigte Schraupelemente wirksam. Darüber hinaus weist die Aufnahmebrücke 13 in Fahrzeugquerrichtung B-B gesehen eine zumindest angenäherte U-förmige Gestalt auf.

Die Versteifungsstruktur 11 umfasst erste seitliche entlang von Dachrahmen 21 und Windschutzscheibensäulen 22 - A-Säulen - verlaufende Rohrstreben 23, eine zweite benachbart einer Windschutzscheibe Ws den Fahrgastraum 10 in Fahrzeugquerrichtung BB überspannende Rohrstrebe 24 und dritte untere benachbart einem Boden des Aufbaukörpers 9 verlaufende seitliche sowie liegende Rohrstreben 25. Die dritten Rohrstreben 25 stützen sich einerseits an der zweiten Rohrstrebe 24 und andererseits an der Rückwand 5 der Fahrgastraumstruktur 4 ab. Die ersten gegenüberliegenden Rohrstreben 23 sind mit einer vierten Rohrstrebe 26 - Fig. 3 - verbunden, die in Fahrzeuglängsrichtung A-A schräg bzw. diagonal ausgerichtet ist. Oberhalb der Rückwand 5 weisen die ersten Rohrstreben 23 Enden 27 und 28 auf, an die fünfte und sechste Rohrstreben 29 und 30 angeschlossen sind, die sich in Höhenrichtung C-C des Personenkraftwagens 1 erstrecken. Hierbei kreuzen sich die fünften und sechsten Rohrstreben 29 und 30 in einem Kreuzungsbereich 31, der höher liegt als die Rückwand 5. Um diese zu erreichen sind die Rohrstreben 29 und 30 mit Querteilen 32 und 33 versehen, die sich in Fahrzeugquerrichtung B-B erstrecken.

Schließlich ist der Rohrrahmen 12 neben den aufrechten Rohrelementen 17 noch mit unteren liegende Rohrelemente 34 und obere liegenden Rohrelemente 35 und 36 versehen. Die oberen Rohrelemente 35 und 36 verlaufen in Fahrzeuglängsrichtung A-A mit Abstand zueinander, wobei zwischen den Rohrelementen 35 und 36 eine Versteifungsplatte 37 aus Metall vorgesehen ist, die eine oder mehrere Gewicht reduzierende Ausnehmungen 38 besitzt und durch Schweißen mit den zuletzt genannten Rohrelementen verbunden ist.

## Patentansprüche

1. Aufbau für Kraftfahrzeuge, insbesondere für Personenkraftwagen, umfassend eine Fahrgastraumstruktur (4), wenigstens eine daran anschließende Tragstruktur (6) zum Einbau eines Antriebsaggregats una Aufnahme von Fahrwerkteilen, wobei die Tragstruktur (6) unter Zwischenschaltung von Halteelementen mit der Fahrgastraumstruktur (4), verbunden ist, wobei die Fahrgastraumstruktur (4) einen aus hochfestem Werkstoff bestehenden Aufbaukörper (9) aufweist, in dessen Innenraum (10) eine Versteifungsstruktur (11) vorgesehen ist und dass die Tragstruktur (6) einen Rohrrahmen (12) für das Antriebsaggregat (7) und eine Aufnahmebrücke (13) für die Fahrwerkteile besitzt, wobei die Aufnahmebrücke (13) durch den Rohrrahmen (12) von der Fahrgastraumstruktur (4) getrennt ist und sich in Richtung Heck (14) des Personenkraftwagens (1) hin erstreckt, **dadurch gekennzeichnet, dass** die Aufnahmebrücke (13) erste Verbindungsabschnitte (15) und zweite Verbindungsabschnitte (16) aufweist, die in Fahrzeuglängsrichtung (A - A) mit Abstand (As) zueinander angeordnet sind, wobei die ersten Verbindungsabschnitte (15) mit aufrechten Rohrelementen (17) des Rohrrahmens (12) und die zweiten Verbindungsabschnitte (16) mit aufrechten Rahmenelementen (18) eines ragrahmens (19) verbunden sind.

2. Aufbau nach Anspruch 1, **dadurch gekennzeichnet, dass** die Aufnahmebrücke (13) in Fahrzeugquerrichtung (B-B) gesehen etwa eine U-förmige Gestalt aufweist.

3. Aufbau nach den Ansprüchen 1 und 2, **dadurch gekennzeichnet, dass** die Aufnahmebrücke (13) aus einer Leichtmetalllegierung besteht.

4. Aufbau nach Anspruch 1, **dadurch gekennzeichnet, dass** der Aufbaukörper (9) der Fahrgastraumstruktur (4) aus glasfaserverstärktem Kunststoff und die Rohrstreben (23 bis 26 und 29 sowie 30) der Versteifungsstruktur (11) aus Metall bestehen.

5. Aufbau nach Anspruch 4, **dadurch gekennzeichnet, dass** die Versteifungsstruktur (11) erste seitliche entlang von Dachrahmen (21) und Windschutzscheibensäulen (22) verlaufende Rohrstreben (23), eine zweite den Fahrgastraum (10) benachbart einer Windschutzscheibe (Ws) der Fahrgastraumstruktur (4) in Fahrzeugquerrichtung (B-B) überspannende Rohrstrebe (24) und dritte untere liegende Rohrstreben (25) umfasst, welche dritten Rohrstreben (25) sich einerseits an der zweiten Rohrstrebe (24) und andererseits an einer aufrechten Rückwand (5) der Fahrgastraumstruktur abstützen.

6. Aufbau nach Anspruch 5, **dadurch gekennzeichnet, dass** die ersten Rohrstreben (23) im Bereich des Dachrahmens (21) der Fahrgastraumstruktur (4) mit einer vierten vorzugsweise diagonal verlaufenden Rohrstrebe (26) abgestützt sind.

7. Aufbau nach Anspruch 6, **dadurch gekennzeichnet, dass** die ersten Rohrstreben mit Enden (27 und 28) oberhalb der Rückwand (5) der Fahrgastraumstruktur (4) mit fünften und sechsten Rohrstreben (29 und 30) verbunden sind, die an die dritten Rohrstreben (25) angeschlossen sind.

8. Aufbau nach Anspruch 7, **dadurch gekennzeichnet, dass** die fünften und sechsten Rohrstreben (29 und 30) sich oberhalb der Rückwand (5) kreuzen.

## Claims

1. Bodywork for motor vehicles, in particular for passenger vehicles, comprising a passenger compartment structure (4), and at least one adjoining supporting structure (6) for the installation of a drive unit and for receiving chassis parts, wherein the supporting structure (6) is connected to the passenger compartment structure (4) with the interconnection of holding elements, wherein the passenger compartment structure (4) has a bodywork element (9) which is composed of high-strength material and in the interior (10) of which a reinforcing structure (11) is provided, and in that the supporting structure (6) has a tubular frame (12) for the drive unit (7) and a receiving bridge (13) for the chassis parts, and wherein the receiving bridge (13) is separated from the passenger compartment structure (4) by the tubular frame (12) and extends in the direction of the rear (14) of the passenger vehicle (1), **characterized in that** the receiving bridge (13) has first connecting sections (15) and second connecting sections (16) which are arranged at a distance (As) from one another in the longitudinal direction (A-A) of the vehicle, with the first connecting sections (15) being connected to upright tubular elements (17) of the tubular frame (12) and the second connecting sections (16) being connected to upright frame elements (18) of a supporting frame (19).

2. Bodywork according to Claim 1, **characterized in that** the receiving bridge (13) has an approximately U-shaped design, as seen in the transverse direction (B-B) of the vehicle.

3. Bodywork according to Claims 1 and 2, **characterized in that** the receiving bridge (13) is composed of a light metal alloy.

4. Bodywork according to Claim 1, **characterized in that** the bodywork element (9) of the passenger compartment structure (4) is composed of glass-fibre-reinforced plastic and the tubular struts (23 to 26 and 29 and also 30) of the reinforcing structure (11) are composed of metal.

5. Bodywork according to Claim 4, **characterized in that** the reinforcing structure (11) comprises first lateral tubular struts (23) running along the roof frame (21) and windscreen pillars (22), a second tubular strut (24) spanning the passenger compartment (10) in the transverse direction (B-B) of the vehicle adjacent to a windscreen (Ws) of the passenger compartment structure (4), and third, lower, horizontal tubular struts (25) which are supported on the second tubular strut (24) and on an upright rear wall (5) of the passenger compartment structure.

6. Bodywork according to Claim 5, **characterized in that** the first tubular struts (23) are supported in the region of the roof frame (21) of the passenger compartment structure (4) by a fourth tubular strut (26) which preferably runs diagonally.

7. Bodywork according to Claim 6, **characterized in that** the first tubular struts are connected at ends (27 and 28) above the rear wall (5) of the passenger compartment structure (4) to fifth and sixth tubular struts (29 and 30) which are joined to the third tubular struts (25).

8. Bodywork according to Claim 7, **characterized in that** the fifth and sixth tubular struts (29 and 30) intersect above the rear wall (5).

## Revendications

1. Carrosserie pour un véhicule à moteur, en particulier pour une voiture automobile, comprenant une structure d'habitacle (4), au moins une structure portante (6) se raccordant à celle-ci pour le montage d'un groupe d'entraînement et le logement de parties du train roulant, dans laquelle la structure portante (6) est assemblée à la structure d'habitacle (4) avec interposition d'éléments de maintien, dans laquelle la structure d'habitacle (4) présente un corps de carrosserie (9) composé d'un matériau à haute résistance, à l'intérieur (10) duquel il est prévu une structure de renforcement (11) et la structure portante (6) possède un châssis tubulaire (12) pour le groupe d'entraînement (7) et un pont de réception (13) pour les parties de train roulant, dans laquelle le pont de réception (13) est séparé de la structure d'habitacle (4) par le châssis tubulaire (12) et s'étend en direction de l'arrière (14) de la voiture automobile (1), **caractérisée en ce que** le pont de réception (13) présente des premières parties d'assemblage (15) et des secondes parties d'assemblage (16), qui sont disposées à une distance (As) les unes des autres dans la direction longitudinale du véhicule (A-A), dans laquelle les premières parties d'assemblage (15) sont reliées à des éléments tubulaires verticaux (17) du châssis tubulaire (12) et les secondes parties d'assemblage (16) sont reliées à des éléments de châssis verticaux (18) d'un châssis de support (19).

2. Carrosserie selon la revendication 1, **caractérisée en ce que** le pont de réception (13) présente sensiblement une forme en U, vu dans la direction transversale (B-B) du véhicule.

3. Carrosserie selon les revendications 1 et 2, **caractérisée en ce que** le pont de réception (13) est composé d'un alliage métallique léger.

4. Carrosserie selon la revendication 1, **caractérisée en ce que** le corps de carrosserie (9) de la structure d'habitacle (4) est composé d'une matière plastique renforcée de fibres de verre et les entretoises tubulaires (23 à 26 et 29 et 30) de la structure de renforcement (11) sont composées de métal.

5. Carrosserie selon la revendication 4, **caractérisée en ce que** la structure de renforcement (11) comprend des premières entretoises tubulaires latérales (23) s'étendant le long du cadre de toit (21) et des colonnes de pare-brise (22), une deuxième entretoise tubulaire (24) enjambant l'habitacle (10), dans la direction transversale (B-B) du véhicule, à proximité d'un pare-brise (Ws) de la structure d'habitacle (4), et des troisièmes entretoises tubulaires inférieures (25), troisièmes entretoises tubulaires (25) qui prennent appui d'une part sur la deuxième entretoise tubulaire (24) et d'autre part sur une paroi arrière verticale (5) de la structure d'habitacle.

6. Carrosserie selon la revendication 5, **caractérisée en ce que** les premières entretoises tubulaires (23) sont appuyées dans la région du cadre de toit (21) de la structure d'habitacle (4) avec une quatrième entretoise tubulaire (26) s'étendant de préférence en diagonale.

7. Carrosserie selon la revendication 6, **caractérisée en ce que** les premières entretoises tubulaires sont reliées par les extrémités (27 et 28) au-dessus de la paroi arrière (5) de la structure d'habitacle (4), à des cinquième et sixième entretoises tubulaires (29, 30), qui sont raccordées aux troisièmes entretoises tubulaires (25).

8. Carrosserie selon la revendication 7, **caractérisée en ce que** les cinquième et sixième entretoises (29 et 30) se croisent au-dessus de la paroi arrière (5).
